# EUROPEAN PATENT APPLICATION

(11) **EP 2 168 822 A1**
(43) Date of publication of application: **31.03.2010**
(21) Application number: 08165509.4
(22) Date of filing: 30.09.2008
(51) Int. Cl.: B60R 25/10, G08B 13/181, G08B 13/24, G08B 23/00

(54) **Protection system for vehicles**

(71) Applicant: II Salvacamper Srl, 26835 Crespiatica (IT)
(72) Inventor: Archenti, Ercole, 26900, Lodi (IT)
(74) Representative: Serravalle, Marco

(57) **Abstract**

The present invention concerns a protection system for vehicles, which system comprises providing the vehicle with at least a proximity sensor located near an access point of the vehicle, and connecting the sensor(s) with a system which discourages from stealing the vehicle.

## Description

The present invention concerns a protection system for vehicles, which system prevents attempts to steal the vehicle or objects present into the vehicle.

In another embodiment, the invention relates to a vehicle provided with at least one proximity sensors installed close to a point of access to the vehicle. Preferably, the invention relates to a vehicle provided with proximity sensors installed close to each access point.

With the term "close to the access point" it is intended that the proximity sensor is preferably installed at a distance comprised between 1cm and 1 m, more preferably from 10 cm and 50 cm from the frame of the access point. With the term "access point" it is generally intended each part of the vehicle which can be used to enter the vehicle, for example doors and windows.

With the term vehicles it is intended any type of vehicle such as cars SUV, jeep, bus, and vehicles for recreational purposes such as camper, caravan, vehicles for transport of animals, and in general, any type of vehicle.

Vehicles are in many cases protected by alarm systems. The most common alarm systems are based on a contact system, i.e. a system which generates an alarm when one of the doors of the vehicle is opened, or alarm systems which detect the presence of a person inside the vehicle.

In both cases, the alarm intervenes only after the thief is already inside the vehicle and, even if the alarm discourages the thief and saves the vehicle from being stolen, the vehicle has already suffered a damage as a result of the entrance of the thief into the vehicle.

The present invention intends not only to protect vehicles from theft, but also to prevent damages to the vehicle as a result of the attempt to steal it.

The present invention is directed to a method for protecting a vehicle, which method comprises providing the vehicle with at least a proximity sensor located close to an access point of the vehicle, and connecting the sensor(s) with a system which discourages from stealing the vehicle.

Proximity sensors are commonly used in modern vehicles, for example for aiding parking, or driving in the presence of fog.

In both cases, sensors are activated when the vehicle is moving, and are turned off when the engine is switch off.

The present invention, contrary to the prior art, relates to a vehicle making use of proximity sensors which are turned on when the vehicle is locked and the engine is turned off.

In a preferred embodiment, proximity sensors are located near each access point of the vehicle and detect the presence of a person at a distance that can preferably range from a few centimetres to a few meters. In order to avoid false alarms, it is however preferred to limit the distance at which an alarm is generated. In a more preferred embodiment, an alarm is generated when a person reaches a distance comprised between 10 cm and 2 m, more preferably between 20 cm and 1 m, even more preferably between 40 cm and 60 cm.

Preferably, the proximity sensor is an hyperfrequency proximity sensor, however any sensor which can detect the presence of a person within the above mentioned distances can be used in the present invention.

Sensors are preferably placed inside the vehicle and are therefore not accessible from the outside. This fact prevents possible damage and makes the system invisible from outside.

Sensors are preferably connected with a central unit which receives the input from sensors and generates a reaction which discourages the thief from attempting the theft.

In a preferred embodiment, the reaction that discourages from stealing the vehicle is a visual and/or acoustic signal. In a preferred embodiment, the central unit switches on the lights of the vehicle, more preferably both inside and outside. In this way, the lights of the vehicle attract attention from the surrounding area and the thief is likely to renounce to his attempt.

In another embodiment of the invention, the central unit, in place of or additionally to the activation of the lights, can activate an acoustic signal. The acoustic signal can be a buzzer, a siren or the car radio.

Preferably, after a preset period of time, the visual and/or acoustic signal is deactivated. The length of the preset period of time is preferably from 5 s to 2 min, more preferably from 10 s to 1 min, most preferably from 15 s to 45 s.

The protection system of the present invention can be used in combination with a conventional alarm system, or can be even integrated with it.

When the protection system is integrated with another alarm system, the central unit is optionally integrated with the central unit of the alarm system and the functionality of the protection system can be integrated with the functionality of the alarm system.

## Claims

1. Method for protecting a vehicle, which method comprises providing the vehicle with at least a proximity sensor located near an access point of the vehicle, and connecting the sensor(s) with a system which discourages from stealing the vehicle.

2. Method according to claim 1, wherein proximity sensors are located near each access point of the vehicle.

3. Method according to claims 1-2 wherein the sensors are connected with a central unit.

4. Method according to claims 1-3 wherein the system that discourages from stealing the vehicle comprises a visual and/or acoustic signal.

5. Method according to claim 4 wherein the visual signal is generated by switching on the lights of the vehicle, preferably both inside and outside the vehicle.

6. Method according to claim 4 wherein the acoustic signal is generated by a buzzer, a siren or the car radio.

7. Method according to claims 1-6 wherein the proximity sensor detects the presence of a person at a distance from the vehicle comprised between 10 cm and 2 m, more preferably between 20 cm and 1 m, even more preferably between 40 cm and 60 cm.

8. Method according to claims 1-7 wherein the proximity sensor is installed at a distance comprised between 1cm and 1 m, more preferably from 10 cm and 50 cm from the frame of the access point.

9. Method according to claims 1-8 wherein the proximity sensor is a hyperfrequency sensor.

10. Vehicle provided with at least a proximity sensors located near at least an access point of the vehicle and **characterized in that** the proximity sensor is activated when the engine of the vehicle is turned off and the vehicle is locked.

11. Vehicle according to claim 7 wherein the proximity sensor is located near each access point of the vehicle.

12. Vehicle according to claims 7-8 wherein the proximity sensor detects the presence of a person at a distance from the vehicle comprised between 10 cm and 2 m, more preferably between 20 cm and 1 m, even more preferably between 40 cm and 60 cm.

13. Vehicle according to claims 7-9 wherein the proximity sensor is installed at a distance comprised between 1 cm and 1 m, preferably from 10 cm and 50 cm from the frame of the access point.

14. Vehicle according to claims 10-13 wherein the proximity sensor is a hyperfrequency sensor.
